# EUROPEAN PATENT APPLICATION

(11) **EP 4 835 659 A2**
(43) Date of publication of application: **04.11.2026**
(21) Application number: 26206547.7
(22) Date of filing: 26.01.2016
(51) Int. Cl.: G06F 9/451

(54) **METHOD AND APPLICATION FOR SCANNING A BARCODE WITH A SMART DEVICE WHILE CONTINUOUSLY RUNNING AND DISPLAYING AN APPLICATION ON THE SAME DEVICE DISPLAY**

(30) Priority: 20.03.2015 US 201514664063
(62) Document number(s) of the earlier application(s) in accordance with Art. 76 EPC: 25187235.4 / 4 603 972; 23166414.5 / 4 224 296; 19190927.4 / 3 637 239; 16152846.8 / 3 070 587
(71) Applicant: Hand Held Products, Inc., Charlotte, NC 28202 (US)
(72) Inventor: TODESCHINI, Eric, Morris Plains, 07950 (US)
(74) Representative: Haseltine Lake Kempner LLP

(57) **Abstract**

A barcode scanning application is provided for a smartphone. The barcode scanning application includes a custom software input panel, which includes a barcode scanning key and a keyboard wedge capable of translating barcode data into keyboard strokes. The barcode scanning application, once initialized, is configured to cause the custom software input panel to be removed from the first portion of the visual display and to open a barcode viewfinder on the portion of the visual display previously occupied by the custom software input panel. The barcode scanning application is configured to scan a barcode in the viewfinder, close the viewfinder, decode the scanned barcode, and send the barcode information to the keyboard wedge. The keyboard wedge is configured to translate the decoded barcode information into keyboard strokes and send the keyboard strokes for displayed within a different application running and displayed continuously on the second portion of the visual display.

## Description

### FIELD OF THE INVENTION

The present invention relates to barcode scanning and smart devices and in particular, to the ability to scan barcodes while running other application on a smart device.

### BACKGROUND

Generally speaking, there are many smartphone applications that require the ability to scan a barcode. In order to add this functionality to their application (app), developers quite frequently rely on a 3rd party software development kits to add this functionality directly within their application. The functionality gives the smartphone user access to barcode scanning only from within that particular application. If a user wants a universal method of scanning barcodes across all their applications, usually, this is not available.

Sometimes a keyboard wedge style application is used to facilitate universal scanning in any application. A keyboard wedge can be either a software program or an inserted hardware device that translates digital signals from a barcode reader or a magnetic strip reader into keyboard strokes for a smart device or a computer. The software form of a keyboard wedge intercepts the digital signals from the reader when they arrive at the computer and instantly translates them into keyboard strokes. The hardware form of a keyboard wedge inserts the translation device between the reader and the keyboard. Data sent through a wedge appears as if it was typed into the computer, while the keyboard itself remains fully functional. Because a computer or smartphone using a keyboard wedge can't tell the difference between data that is entered by a scanning device or data that is entered by keyboard typing, a wedge can be used to easily add barcode reading capability to an existing device without modifying software applications.

A keyboard wedge-style application can be used to facilitate universal scanning in any application by keeping a background service running that responds to a particular key press. When the service detects this key press, it brings up the barcode scanner and inserts the resultant scan data into the keyboard buffer so that is it inserted at the cursor as text in whichever application has focus at the moment. This is usually a somewhat clumsy operation, as it requires a scan wedge application to first be started and running in the background. The user also needs to be aware of the hardware button that will trigger a scan event.

Today, many smartphone operating systems allow you to create custom software keyboards (soft input panels) which are sometimes used to add a barcode scanning button and scan wedge functionality. When the custom keyboard is loaded, if the user wants to enter barcode data into a text field, the user simply opens the software keyboard, hits the scanner button, scans the barcode, and the result is placed in the text field. However, when the scanning trigger occurs, the application loses context, that is the running application is no longer displayed, while the barcode scanner preview screen is displayed. This might worry some users that the application they were just in was closed and that they possibly lost their data.

Therefore, a need exists for a method and an application to scan and decode a barcode on a smartphone without losing context of a running application.

### SUMMARY

Accordingly, in one aspect, the present invention embraces a barcode scanning application for a smartphone. In general, the smartphone has an embedded camera, a visual display, and an operating system. The operating system communicatively couples the embedded camera and the visual display.

In an exemplary embodiment, the barcode scanning application comprises a custom software input panel. The custom software input panel is provided with a barcode scanning key. The custom software input panel occupies a first portion of the visual display of the smartphone. The barcode scanning application further is provided with a keyboard wedge capable of translating barcode data into keyboard strokes. The barcode scanning application is communicatively coupled through the operating system to the embedded camera, the keyboard wedge and the custom software input panel. The barcode scanning application is configured to operate while a different application is running and being displayed continuously on a second portion of the visual display. The custom software input panel is configured to initiate the barcode scanning application when the barcode scanning key is touched. The barcode scanning application, once initialized, is configured to cause the custom software input panel to be removed from the first portion of the visual display and to open the barcode viewfinder on the portion of the visual display previously occupied by the custom software input panel. The barcode scanning application is further configured to scan a barcode in the viewfinder, then close the viewfinder, decode the scanned barcode, and send the barcode information to the keyboard wedge. The keyboard wedge is configured to translate the decoded barcode information into keyboard strokes and to send the keyboard strokes to be displayed within the different application running and displayed continuously on the second portion of the visual display.

In another exemplary embodiment of the invention, the keyboard wedge is a software program, and is an integral part of the custom software input panel.

In another exemplary embodiment of the invention, the keyboard wedge is a hardware device incorporated into the smartphone.

In yet another exemplary embodiment of the invention, the barcode scanning application is further configured to re-display the custom software input panel after closing the viewfinder.

In still another exemplary embodiment of the invention, the first portion of the visual display occupies less than 50% of the visual display.

In yet a further exemplary embodiment of the invention, causing the custom software input panel to be removed from the first portion of the visual display is accomplished by minimizing the custom software input panel.

In another embodiment of the invention, causing the custom software input panel to be removed from the first portion of the visual display is accomplished by closing the custom software input panel.

In another exemplary embodiment of the barcode scanning application, a smart phone is provided having an embedded camera, a visual display, and an operating system, the operating system communicatively coupling the embedded camera and the visual display. The barcode scanning application includes a custom software input panel. The custom software input panel is provided with a barcode scanning key. The custom software input panel occupies a first portion of the visual display. The custom input panel is communicatively coupled through the operating system to the embedded camera. The barcode scanning application also includes a keyboard wedge capable of translating barcode data into keyboard strokes. The keyboard wedge is an integral part of the custom software input panel. The keyboard wedge is configured to control a barcode scanning operation. The custom software input panel is configured to initiate the barcode scanning operation when the barcode scanning key is touched. The keyboard wedge is configured to operate the barcode scanning operation while a different application is running and being displayed continuously on a second portion of the visual display. The custom software input panel, upon initiating barcode scanning, is configured to minimize and to open a barcode viewfinder on the first portion of the visual display previously occupied by the custom software input panel. The keyboard wedge is configured to scan a barcode in the barcode viewfinder, close the viewfinder, decode the scanned barcode, translate the decoded barcode information into keyboard strokes, and to send the keyboard strokes to be displayed within the different application running and displayed continuously on the second portion of the visual display.

The barcode scanning application of claim 16, wherein the keyboard wedge is further configured to re-display the custom software input panel after closing the viewfinder.

In another aspect, the invention embraces a method of scanning a barcode with a smartphone while continuously running and displaying an application on a first portion of a smartphone visual display. The smartphone is provided with a user interface panel occupying a second portion of the smartphone visual display. The smartphone is further provided with barcode scanning software, a viewfinder, and an embedded camera. The barcode scanning software, the viewfinder, the embedded camera, the user interface panel, and the visual display are communicatively coupled. The method of the present invention is comprised of the following steps: i. initiating barcode scanning via the user interface panel while an application is running and being displayed on the first portion of the smartphone visual display, ii. removing the user interface panel from the second portion of the smartphone visual display, iii. opening a barcode scanning viewfinder on the second portion of the smartphone visual display previously occupied by the user interface panel, iv. routing the embedded camera video feed to the barcode scanning viewfinder, v. locating a barcode in the barcode scanning viewfinder, vi. scanning the barcode, vii. decoding the barcode, viii. closing the viewfinder, ix. translating the decoded barcode data into keyboard strokes, and x. displaying decoded barcode information on the first portion of the smartphone visual display within the running application.

In another exemplary embodiment of the method of the invention, the user interface panel is a custom software input panel. The custom software input panel is provided with a barcode scanning key. The initiating step is accomplished by touching the barcode scanning key.

In another exemplary embodiment of the method of the invention, the user interface panel is provided with voice command capability, and the initiating step is accomplished by a voice command.

In yet another exemplary embodiment of the invention, the method further comprises the step of re-displaying the custom software input panel to occupy the second portion of the smartphone visual display after the closing the viewfinder step.

In another exemplary embodiment of the invention, the decoding step is accomplished at a remote location. The remote location is wirelessly enabled and in communication with the smartphone. The method further comprises the steps of transmitting the scanned barcode image to a remote location before the decoding step, and transmitting decoded barcode information back to the smartphone after the decoding step.

In still a further exemplary embodiment of the invention, the smartphone is provided with a keyboard wedge. The keyboard wedge is communicatively coupled to the barcode scanning software. The translating step is accomplished by the keyboard wedge.

In another exemplary embodiment, the removing step is accomplished by closing the user interface.

In yet a further exemplary embodiment of the invention, the removing step is accomplished by minimizing the user interface.

The foregoing illustrative summary, as well as other exemplary objectives and/or advantages of the invention, and the manner in which the same are accomplished, are further explained within the following detailed description and its accompanying drawings.

### BRIEF DESCRIPTION OF THE DRAWINGS

Figure 1 schematically depicts a smartphone with components, which allow the application of the invention to operate.
Figure 2a-2c schematically depict the smartphone with the barcode scanning application in operation.
Figure 3 schematically depicts a smartphone with components for another exemplary embodiment of the barcode scanning application of the invention.
Figure 4 schematically depicts the method of scanning a barcode with a smartphone of the present invention.

### DETAILED DESCRIPTION

The present invention embraces a barcode scanning application for a smartphone.

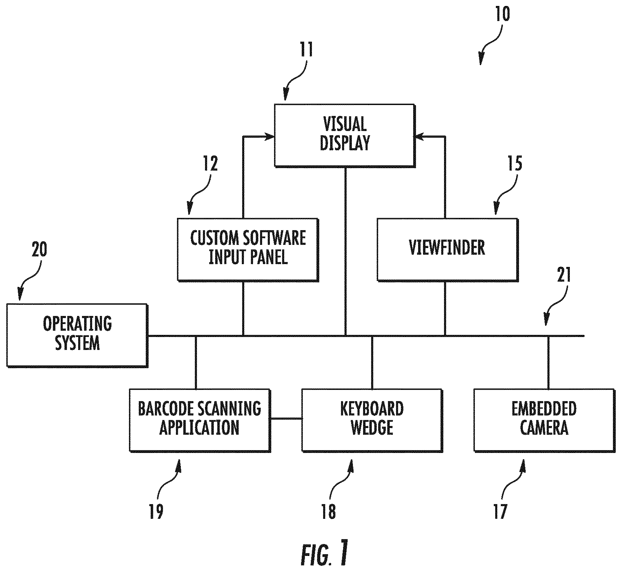

In an exemplary embodiment, referring to Figure 1, a smartphone (10) is provided with a visual display (11), an operating system (20), and an embedded camera (17). A system bus (21), in cooperation with the operating system (20) communicatively couples the embedded camera (17) and the visual display (11). The smartphone (10), in connection with the barcode scanning application (19), is provided with a custom software input panel (12) which can be displayed on the visual display (11). A keyboard wedge (18) is provided with the barcode scanning application (19) to translate barcode data into keystrokes which appear on the visual display (11) in a running application. The keyboard wedge (18), barcode scanning application (19), and the custom software input panel (12) are communicatively linked to each other and to other smartphone (10) components via the system bus (21) and the operating system (20). The smartphone (10) is also provided with a viewfinder (15) which can be displayed on the visual display (11).

The keyboard wedge (18) can translate decoded barcode information into keystrokes, which are then displayed in an application running on the visual display (11). Keyboard wedges can be software programs or can be hardware installed on the smartphone (10). Preferably, the keyboard wedge (18) is software and is an integral part of the custom software input (12) panel. Most preferably, the keyboard wedge (18) controls the barcode scanning operation.

The custom software input panel (12) is preferably designed to take up less than 50% of the visual display (11) when the custom software input panel is open, although a greater portion is possible. The custom software input panel (12) is provided with a barcode scanning key, not shown in Figure 1.

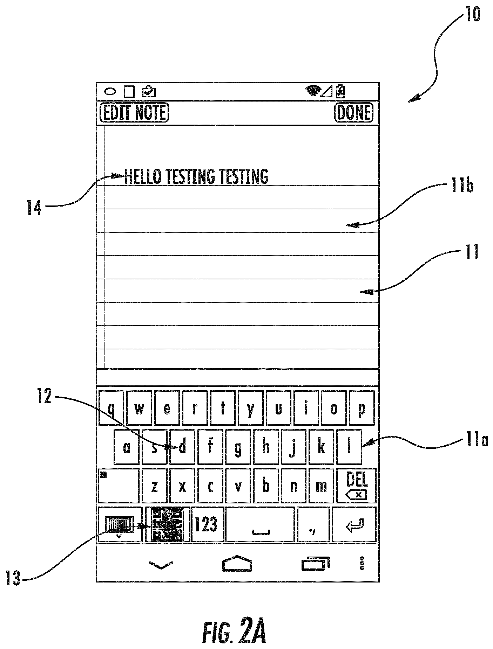

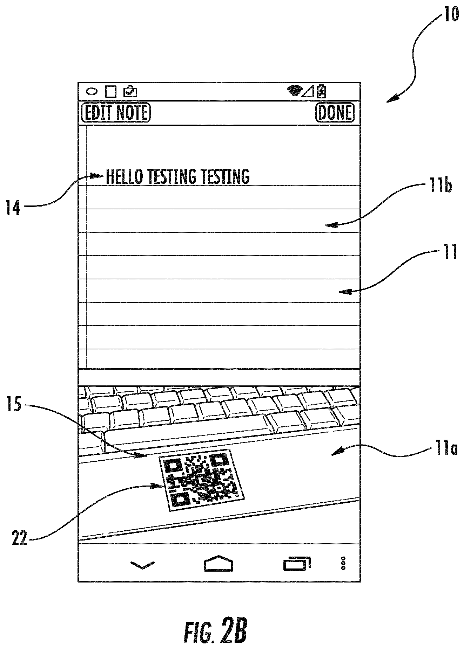

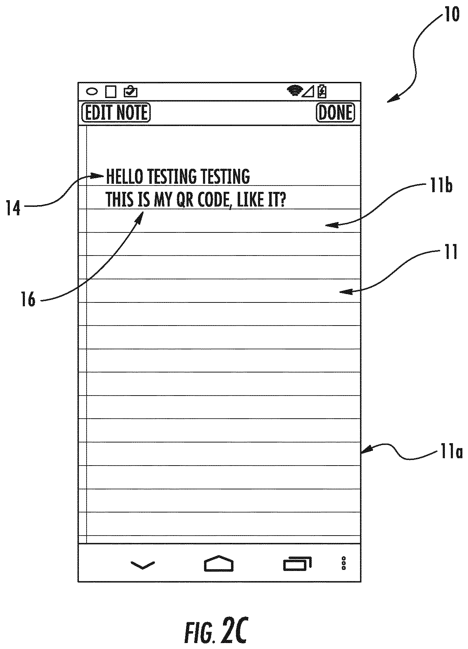

Referring to Figures 2a, 2b, and 2c, the smartphone (10) of Figure 1 is further depicted with the barcode scanning application (19) in use.

In an exemplary embodiment, the smartphone (10) is illustrated with a visual display (11). The visual display has a first portion (11a) and a second portion (11b). The first portion (11a) is occupied by a custom software input panel (12). On the custom software input panel (12) is a barcode scanning key (13). The second portion (11b) of the visual display (11) is occupied by a running application (14), designated by the lined screen and the words "Hello testing testing".

When the barcode scanning key (13) is pressed by a user of the smartphone (10), the visual display (11) changes from that of Figure 2a, to that of Figure 2b. Referring now to Figure 2b, a barcode viewfinder (15) has replaced the custom software input panel (12) of Figure 2a on the first portion (11a) of the visual display (11). The barcode scanning application (19) of Figure 1 is initialized with the press of the barcode scanning key (13) and subsequently scans and decodes the barcode (22) in the viewfinder (15).

Referring now to Figure 2c, the keyboard wedge has taken the decoded barcode information and translated the information into keyboard strokes (16) which appear in the running application (14); the decoded barcode information translated into keyboard strokes (16) appears on the visual display (11) as the words "This is my QR Code, like it?". In Figures 2a, 2b, and 2c, the running application (14) has continuously been displayed on the second portion (11b) of the visual display (11) during the entire the barcode scanning operation.

In another exemplary embodiment, the custom software input panel (12) may be minimized when the barcode scanning key (13) is pressed. Alternatively, in another exemplary embodiment, the custom software input panel (12) may be closed when the barcode scanning key (13) is pressed.

In another exemplary embodiment, the custom software input panel (12) may be re-opened or re-displayed on the first portion (11a) of the visual display (11) after the barcode (22) is scanned.

The smartphone (10) may be provided with other features and capabilities not shown or described here. For example, in another exemplary embodiment, the smartphone (10) is provided with means for wireless communication. The scanned barcode image may be transmitted via the means for wireless communications to a remote location for decoding, and then the decoded information may be transmitted back to the smartphone (10) wherein the keyboard wedge (18) captures the decoded information, translates it into keyboard strokes (16), and causes it to be displayed in the running application (15).

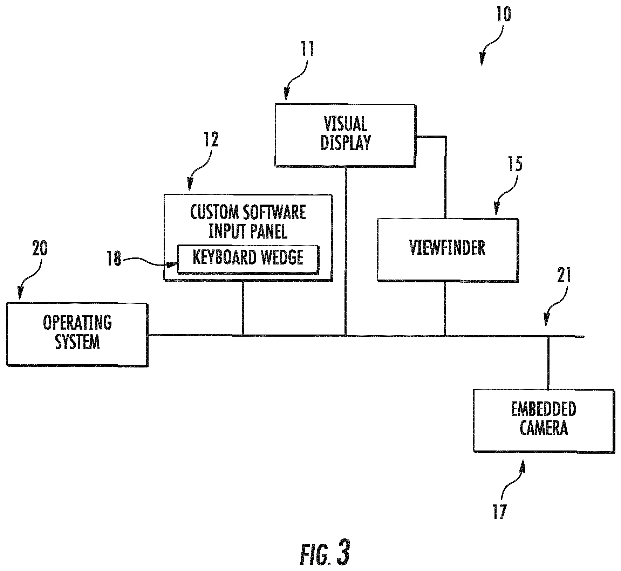

Referring now to Figure 3, in another exemplary embodiment, a smartphone (10) is provided with components similar to those in Figure 1 described hereinbefore. However in the present embodiment, the keyboard wedge (18) is resident as an integral part of the custom software input panel (12). The keyboard wedge (18) controls the barcode scanning operation. The custom software input panel (12) and keyboard wedge (18) cooperate as shown in Figures 2a-2c to initiate and run a barcode scanning operation on the lower portion (11a) of the visual display (11) while continuously running and displaying another application on the upper portion (11b) of the visual display (11).

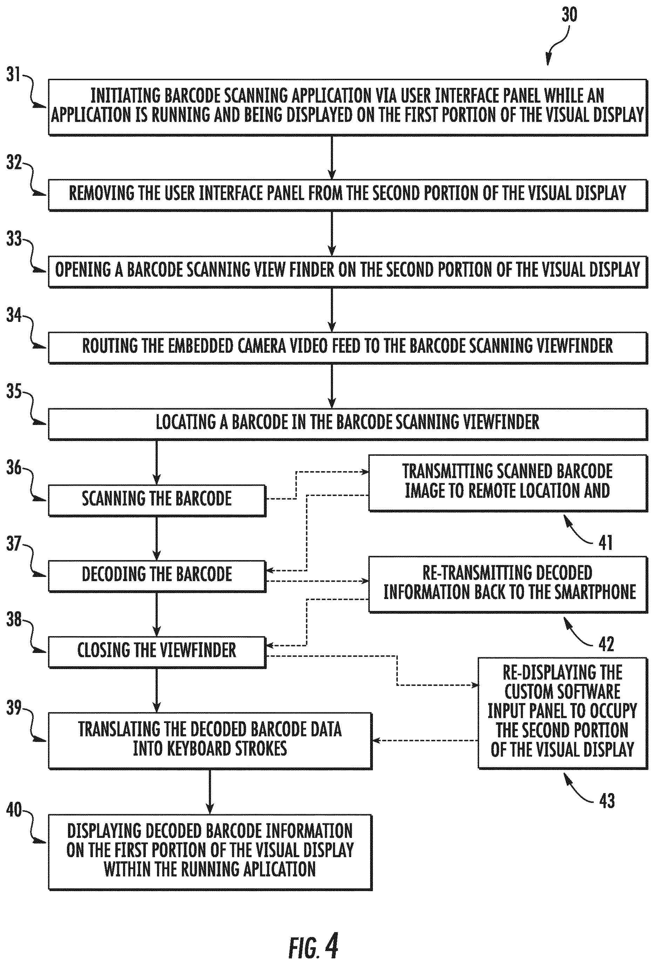

The present invention also embraces a method of scanning a barcode with a smartphone while continuously running and displaying another application on the smartphone. Referring to Figure 4, in an exemplary embodiment, the method (30) of scanning a barcode with a smartphone while continuously running and displaying an application on the smartphone visual display is illustrated with a flowchart. Generally the smartphone of the method is the same as has been described hereinbefore in connection with Figure 1 or Figure 3 and as shown in operation in Figures 2a-2c.

In an exemplary embodiment, the method (30) is comprised of the steps of: (31) initiating barcode scanning via the user interface panel while an application is running and being displayed on the first portion of the smartphone visual display; (32) removing the user interface panel from the second portion of the smartphone visual display; (33)opening a barcode scanning viewfinder on the second portion of the smartphone visual display previously occupied by the user interface panel; (34) routing the embedded camera video feed to the barcode scanning viewfinder; (35) locating a barcode in the barcode scanning viewfinder; (36) scanning the barcode; (37) decoding the barcode; (38) closing the viewfinder; (39) translating the decoded barcode data into keyboard strokes; and (40) displaying decoded barcode information on the first portion of the smartphone visual display within the running application.

In another exemplary embodiment, the method (30) further comprises the optional step of (43) re-displaying the custom software input panel to occupy the second portion of the visual display after the viewfinder is closed in the (38) closing step.

In yet another exemplary embodiment, the (37) decoding step is accomplished at a remote location. Most if not all smartphones are equipped with wireless communication capabilities. The scanned barcode image can be transmitted to a remote location for decoding and then the information transmitted back to the smartphone for display. In this exemplary embodiment, the method (30) further comprises the steps of: (41) transmitting the scanned barcode image to a remote location after the (36) scanning step, and (42) retransmitting the decoded information back to the smartphone after the (37) decoding step.

In the exemplary embodiments of the method (30) described hereinbefore and depicted schematically in Figure 3, an application continuously runs and is displayed on a portion of the visual display of the smartphone. A custom software input panel, which includes a barcode scanning key has been provided on the smartphone. This custom software input panel, when accessed, occupies only a portion of the visual display, such that the running application is still displayed. When the barcode key is pressed, the barcode scanning application is initialized. The custom software input panel on the visual display is removed, minimized or closed, and replaced with a barcode viewfinder, while the running application remains running and displayed on a portion of the visual display. The user locates and scans a barcode in the viewfinder. The barcode scanning application decodes the barcode. The keyboard wedge takes the decoded information, translates it into keyboard strokes, and displays it in the running application on the visual display.

To supplement the present disclosure, this application incorporates entirely by reference the following commonly assigned patents, patent application publications, and patent applications:
U.S. Patent No. 6,832,725; U.S. Patent No. 7,128,266;
U.S. Patent No. 7,159,783; U.S. Patent No. 7,413,127;
U.S. Patent No. 7,726,575; U.S. Patent No. 8,294,969;
U.S. Patent No. 8,317,105; U.S. Patent No. 8,322,622;
U.S. Patent No. 8,366,005; U.S. Patent No. 8,371,507;
U.S. Patent No. 8,376,233; U.S. Patent No. 8,381,979;
U.S. Patent No. 8,390,909; U.S. Patent No. 8,408,464;
U.S. Patent No. 8,408,468; U.S. Patent No. 8,408,469;
U.S. Patent No. 8,424,768; U.S. Patent No. 8,448,863;
U.S. Patent No. 8,457,013; U.S. Patent No. 8,459,557;
U.S. Patent No. 8,469,272; U.S. Patent No. 8,474,712;
U.S. Patent No. 8,479,992; U.S. Patent No. 8,490,877;
U.S. Patent No. 8,517,271; U.S. Patent No. 8,523,076;
U.S. Patent No. 8,528,818; U.S. Patent No. 8,544,737;
U.S. Patent No. 8,548,242; U.S. Patent No. 8,548,420;
U.S. Patent No. 8,550,335; U.S. Patent No. 8,550,354;
U.S. Patent No. 8,550,357; U.S. Patent No. 8,556,174;
U.S. Patent No. 8,556,176; U.S. Patent No. 8,556,177;
U.S. Patent No. 8,559,767; U.S. Patent No. 8,599,957;
U.S. Patent No. 8,561,895; U.S. Patent No. 8,561,903;
U.S. Patent No. 8,561,905; U.S. Patent No. 8,565,107;
U.S. Patent No. 8,571,307; U.S. Patent No. 8,579,200;
U.S. Patent No. 8,583,924; U.S. Patent No. 8,584,945;
U.S. Patent No. 8,587,595; U.S. Patent No. 8,587,697;
U.S. Patent No. 8,588,869; U.S. Patent No. 8,590,789;
U.S. Patent No. 8,596,539; U.S. Patent No. 8,596,542;
U.S. Patent No. 8,596,543; U.S. Patent No. 8,599,271;
U.S. Patent No. 8,599,957; U.S. Patent No. 8,600,158;
U.S. Patent No. 8,600,167; U.S. Patent No. 8,602,309;
U.S. Patent No. 8,608,053; U.S. Patent No. 8,608,071;
U.S. Patent No. 8,611,309; U.S. Patent No. 8,615,487;
U.S. Patent No. 8,616,454; U.S. Patent No. 8,621,123;
U.S. Patent No. 8,622,303; U.S. Patent No. 8,628,013;
U.S. Patent No. 8,628,015; U.S. Patent No. 8,628,016;
U.S. Patent No. 8,629,926; U.S. Patent No. 8,630,491;
U.S. Patent No. 8,635,309; U.S. Patent No. 8,636,200;
U.S. Patent No. 8,636,212; U.S. Patent No. 8,636,215;
U.S. Patent No. 8,636,224; U.S. Patent No. 8,638,806;
U.S. Patent No. 8,640,958; U.S. Patent No. 8,640,960;
U.S. Patent No. 8,643,717; U.S. Patent No. 8,646,692;
U.S. Patent No. 8,646,694; U.S. Patent No. 8,657,200;
U.S. Patent No. 8,659,397; U.S. Patent No. 8,668,149;
U.S. Patent No. 8,678,285; U.S. Patent No. 8,678,286;
U.S. Patent No. 8,682,077; U.S. Patent No. 8,687,282;
U.S. Patent No. 8,692,927; U.S. Patent No. 8,695,880;
U.S. Patent No. 8,698,949; U.S. Patent No. 8,717,494;
U.S. Patent No. 8,717,494; U.S. Patent No. 8,720,783;
U.S. Patent No. 8,723,804; U.S. Patent No. 8,723,904;
U.S. Patent No. 8,727,223; U.S. Patent No. D702,237;
U.S. Patent No. 8,740,082; U.S. Patent No. 8,740,085;
U.S. Patent No. 8,746,563; U.S. Patent No. 8,750,445;
U.S. Patent No. 8,752,766; U.S. Patent No. 8,756,059;
U.S. Patent No. 8,757,495; U.S. Patent No. 8,760,563;
U.S. Patent No. 8,763,909; U.S. Patent No. 8,777,108;
U.S. Patent No. 8,777,109; U.S. Patent No. 8,779,898;
U.S. Patent No. 8,781,520; U.S. Patent No. 8,783,573;
U.S. Patent No. 8,789,757; U.S. Patent No. 8,789,758;
U.S. Patent No. 8,789,759; U.S. Patent No. 8,794,520;
U.S. Patent No. 8,794,522; U.S. Patent No. 8,794,526;
U.S. Patent No. 8,798,367; U.S. Patent No. 8,807,431;
U.S. Patent No. 8,807,432; U.S. Patent No. 8,820,630;
International Publication No. 2013/163789;
International Publication No. 2013/173985;
International Publication No. 2014/019130;
International Publication No. 2014/110495;
U.S. Patent Application Publication No. 2008/0185432;
U.S. Patent Application Publication No. 2009/0134221;
U.S. Patent Application Publication No. 2010/0177080;
U.S. Patent Application Publication No. 2010/0177076;
U.S. Patent Application Publication No. 2010/0177707;
U.S. Patent Application Publication No. 2010/0177749;
U.S. Patent Application Publication No. 2011/0202554;
U.S. Patent Application Publication No. 2012/0111946;
U.S. Patent Application Publication No. 2012/0138685;
U.S. Patent Application Publication No. 2012/0168511;
U.S. Patent Application Publication No. 2012/0168512;
U.S. Patent Application Publication No. 2012/0193423;
U.S. Patent Application Publication No. 2012/0203647;
U.S. Patent Application Publication No. 2012/0223141;
U.S. Patent Application Publication No. 2012/0228382;
U.S. Patent Application Publication No. 2012/0248188;
U.S. Patent Application Publication No. 2013/0043312;
U.S. Patent Application Publication No. 2013/0056285;
U.S. Patent Application Publication No. 2013/0070322;
U.S. Patent Application Publication No. 2013/0075168;
U.S. Patent Application Publication No. 2013/0082104;
U.S. Patent Application Publication No. 2013/0175341;
U.S. Patent Application Publication No. 2013/0175343;
U.S. Patent Application Publication No. 2013/0200158;
U.S. Patent Application Publication No. 2013/0256418;
U.S. Patent Application Publication No. 2013/0257744;
U.S. Patent Application Publication No. 2013/0257759;
U.S. Patent Application Publication No. 2013/0270346;
U.S. Patent Application Publication No. 2013/0278425;
U.S. Patent Application Publication No. 2013/0287258;
U.S. Patent Application Publication No. 2013/0292475;
U.S. Patent Application Publication No. 2013/0292477;
U.S. Patent Application Publication No. 2013/0293539;
U.S. Patent Application Publication No. 2013/0293540;
U.S. Patent Application Publication No. 2013/0306728;
U.S. Patent Application Publication No. 2013/0306730;
U.S. Patent Application Publication No. 2013/0306731;
U.S. Patent Application Publication No. 2013/0307964;
U.S. Patent Application Publication No. 2013/0308625;
U.S. Patent Application Publication No. 2013/0313324;
U.S. Patent Application Publication No. 2013/0313325;
U.S. Patent Application Publication No. 2013/0341399;
U.S. Patent Application Publication No. 2013/0342717;
U.S. Patent Application Publication No. 2014/0001267;
U.S. Patent Application Publication No. 2014/0002828;
U.S. Patent Application Publication No. 2014/0008430;
U.S. Patent Application Publication No. 2014/0008439;
U.S. Patent Application Publication No. 2014/0025584;
U.S. Patent Application Publication No. 2014/0027518;
U.S. Patent Application Publication No. 2014/0034734;
U.S. Patent Application Publication No. 2014/0036848;
U.S. Patent Application Publication No. 2014/0039693;
U.S. Patent Application Publication No. 2014/0042814;
U.S. Patent Application Publication No. 2014/0049120;
U.S. Patent Application Publication No. 2014/0049635;
U.S. Patent Application Publication No. 2014/0061305;
U.S. Patent Application Publication No. 2014/0061306;
U.S. Patent Application Publication No. 2014/0063289;
U.S. Patent Application Publication No. 2014/0066136;
U.S. Patent Application Publication No. 2014/0067692;
U.S. Patent Application Publication No. 2014/0070005;
U.S. Patent Application Publication No. 2014/0071840;
U.S. Patent Application Publication No. 2014/0074746;
U.S. Patent Application Publication No. 2014/0075846;
U.S. Patent Application Publication No. 2014/0076974;
U.S. Patent Application Publication No. 2014/0078341;
U.S. Patent Application Publication No. 2014/0078342;
U.S. Patent Application Publication No. 2014/0078345;
U.S. Patent Application Publication No. 2014/0084068;
U.S. Patent Application Publication No. 2014/0097249;
U.S. Patent Application Publication No. 2014/0098792;
U.S. Patent Application Publication No. 2014/0100774;
U.S. Patent Application Publication No. 2014/0100813;
U.S. Patent Application Publication No. 2014/0103115;
U.S. Patent Application Publication No. 2014/0104413;
U.S. Patent Application Publication No. 2014/0104414;
U.S. Patent Application Publication No. 2014/0104416;
U.S. Patent Application Publication No. 2014/0104451;
U.S. Patent Application Publication No. 2014/0106594;
U.S. Patent Application Publication No. 2014/0106725;
U.S. Patent Application Publication No. 2014/0108010;
U.S. Patent Application Publication No. 2014/0108402;
U.S. Patent Application Publication No. 2014/0108682;
U.S. Patent Application Publication No. 2014/0110485;
U.S. Patent Application Publication No. 2014/0114530;
U.S. Patent Application Publication No. 2014/0124577;
U.S. Patent Application Publication No. 2014/0124579;
U.S. Patent Application Publication No. 2014/0125842;
U.S. Patent Application Publication No. 2014/0125853;
U.S. Patent Application Publication No. 2014/0125999;
U.S. Patent Application Publication No. 2014/0129378;
U.S. Patent Application Publication No. 2014/0131438;
U.S. Patent Application Publication No. 2014/0131441;
U.S. Patent Application Publication No. 2014/0131443;
U.S. Patent Application Publication No. 2014/0131444;
U.S. Patent Application Publication No. 2014/0131445;
U.S. Patent Application Publication No. 2014/0131448;
U.S. Patent Application Publication No. 2014/0133379;
U.S. Patent Application Publication No. 2014/0136208;
U.S. Patent Application Publication No. 2014/0140585;
U.S. Patent Application Publication No. 2014/0151453;
U.S. Patent Application Publication No. 2014/0152882;
U.S. Patent Application Publication No. 2014/0158770;
U.S. Patent Application Publication No. 2014/0159869;
U.S. Patent Application Publication No. 2014/0160329;
U.S. Patent Application Publication No. 2014/0166755;
U.S. Patent Application Publication No. 2014/0166757;
U.S. Patent Application Publication No. 2014/0166759;
U.S. Patent Application Publication No. 2014/0166760;
U.S. Patent Application Publication No. 2014/0166761;
U.S. Patent Application Publication No. 2014/0168787;
U.S. Patent Application Publication No. 2014/0175165;
U.S. Patent Application Publication No. 2014/0175169;
U.S. Patent Application Publication No. 2014/0175172;
U.S. Patent Application Publication No. 2014/0175174;
U.S. Patent Application Publication No. 2014/0191644;
U.S. Patent Application Publication No. 2014/0191913;
U.S. Patent Application Publication No. 2014/0197238;
U.S. Patent Application Publication No. 2014/0197239;
U.S. Patent Application Publication No. 2014/0197304;
U.S. Patent Application Publication No. 2014/0203087;
U.S. Patent Application Publication No. 2014/0204268;
U.S. Patent Application Publication No. 2014/0214631;
U.S. Patent Application Publication No. 2014/0217166;
U.S. Patent Application Publication No. 2014/0217180;
U.S. Patent Application No. 13/367,978 for a Laser Scanning Module Employing an Elastomeric U-Hinge Based Laser Scanning Assembly, filed February 7, 2012 (Feng et al.);
U.S. Patent Application No. 29/436,337 for an Electronic Device, filed November 5, 2012 (Fitch et al.);
U.S. Patent Application No. 13/771,508 for an Optical Redirection Adapter, filed February 20, 2013 (Anderson);
U.S. Patent Application No. 13/852,097 for a System and Method for Capturing and Preserving Vehicle Event Data, filed March 28, 2013 (Barker et al.);
U.S. Patent Application No. 13/902,110 for a System and Method for Display of Information Using a Vehicle-Mount Computer, filed May 24, 2013 (Hollifield);
U.S. Patent Application No. 13/902,144, for a System and Method for Display of Information Using a Vehicle-Mount Computer, filed May 24, 2013 (Chamberlin);
U.S. Patent Application No. 13/902,242 for a System For Providing A Continuous Communication Link With A Symbol Reading Device, filed May 24, 2013 (Smith et al.);
U.S. Patent Application No. 13/912,262 for a Method of Error Correction for 3D Imaging Device, filed June 7, 2013 (Jovanovski et al.);
U.S. Patent Application No. 13/912,702 for a System and Method for Reading Code Symbols at Long Range Using Source Power Control, filed June 7, 2013 (Xian et al.);
U.S. Patent Application No. 29/458,405 for an Electronic Device, filed June 19, 2013 (Fitch et al.);
U.S. Patent Application No. 13/922,339 for a System and Method for Reading Code Symbols Using a Variable Field of View, filed June 20, 2013 (Xian et al.);
U.S. Patent Application No. 13/927,398 for a Code Symbol Reading System Having Adaptive Autofocus, filed June 26, 2013 (Todeschini);
U.S. Patent Application No. 13/930,913 for a Mobile Device Having an Improved User Interface for Reading Code Symbols, filed June 28, 2013 (Gelay et al.);
U.S. Patent Application No. 29/459,620 for an Electronic Device Enclosure, filed July 2, 2013 (London et al.);
U.S. Patent Application No. 29/459,681 for an Electronic Device Enclosure, filed July 2, 2013 (Chaney et al.);
U.S. Patent Application No. 13/933,415 for an Electronic Device Case, filed July 2, 2013 (London et al.);
U.S. Patent Application No. 29/459,785 for a Scanner and Charging Base, filed July 3, 2013 (Fitch et al.);
U.S. Patent Application No. 29/459,823 for a Scanner, filed July 3, 2013 (Zhou et al.);
U.S. Patent Application No. 13/947,296 for a System and Method for Selectively Reading Code Symbols, filed July 22, 2013 (Rueblinger et al.);
U.S. Patent Application No. 13/950,544 for a Code Symbol Reading System Having Adjustable Object Detection, filed July 25, 2013 (Jiang);
U.S. Patent Application No. 13/961,408 for a Method for Manufacturing Laser Scanners, filed August 7, 2013 (Saber et al.);
U.S. Patent Application No. 14/018,729 for a Method for Operating a Laser Scanner, filed September 5, 2013 (Feng et al.);
U.S. Patent Application No. 14/019,616 for a Device Having Light Source to Reduce Surface Pathogens, filed September 6, 2013 (Todeschini);
U.S. Patent Application No. 14/023,762 for a Handheld Indicia Reader Having Locking Endcap, filed September 11, 2013 (Gannon);
U.S. Patent Application No. 14/035,474 for Augmented-Reality Signature Capture, filed September 24, 2013 (Todeschini);
U.S. Patent Application No. 29/468,118 for an Electronic Device Case, filed September 26, 2013 (Oberpriller et al.);
U.S. Patent Application No. 14/055,234 for Dimensioning System, filed October 16, 2013 (Fletcher);
U.S. Patent Application No. 14/053,314 for Indicia Reader, filed October 14, 2013 (Huck);
U.S. Patent Application No. 14/065,768 for Hybrid System and Method for Reading Indicia, filed October 29, 2013 (Meier et al.);
U.S. Patent Application No. 14/074,746 for Self-Checkout Shopping System, filed November 8, 2013 (Hejl et al.);
U.S. Patent Application No. 14/074,787 for Method and System for Configuring Mobile Devices via NFC Technology, filed November 8, 2013 (Smith et al.);
U.S. Patent Application No. 14/087,190 for Optimal Range Indicators for Bar Code Validation, filed November 22, 2013 (Hejl);
U.S. Patent Application No. 14/094,087 for Method and System for Communicating Information in an Digital Signal, filed December 2, 2013 (Peake et al.);
U.S. Patent Application No. 14/101,965 for High Dynamic-Range Indicia Reading System, filed December 10, 2013 (Xian);
U.S. Patent Application No. 14/150,393 for Indicia-reader Having Unitary Construction Scanner, filed January 8, 2014 (Colavito et al.);
U.S. Patent Application No. 14/154,207 for Laser Barcode Scanner, filed January 14, 2014 (Hou et al.);
U.S. Patent Application No. 14/165,980 for System and Method for Measuring Irregular Objects with a Single Camera filed January 28, 2014 (Li et al.);
U.S. Patent Application No. 14/166,103 for Indicia Reading Terminal Including Optical Filter filed January 28, 2014 (Lu et al.);
U.S. Patent Application No. 14/200,405 for Indicia Reader for Size-Limited Applications filed March 7, 2014 (Feng et al.);
U.S. Patent Application No. 14/231,898 for Hand-Mounted Indicia-Reading Device with Finger Motion Triggering filed April 1, 2014 (Van Horn et al.);
U.S. Patent Application No. 14/250,923for Reading Apparatus Having Partial Frame Operating Mode filed April 11, 2014, (Deng et al.*);*
U.S. Patent Application No. 14/257,174 for Imaging Terminal Having Data Compression filed April 21, 2014, (Barber et al.*);*
U.S. Patent Application No. 14/257,364 for Docking System and Method Using Near Field Communication filed April 21, 2014 (Showering*);*
U.S. Patent Application No. 14/264,173 for Autofocus Lens System for Indicia Readers filed April 29, 2014 (Ackley et al.*);*
U.S. Patent Application No. 14/274,858 for Mobile Printer with Optional Battery Accessory filed May 12, 2014 (Marty et al.*);*
U.S. Patent Application No. 14/277,337 for MULTIPURPOSE OPTICAL READER, filed May 14, 2014 (Jovanovski et al.*);*
U.S. Patent Application No. 14/283,282 for TERMINAL HAVING ILLUMINATION AND FOCUS CONTROL filed May 21, 2014 (Liu et al.*);*
U.S. Patent Application No. 14/300,276 for METHOD AND SYSTEM FOR CONSIDERING INFORMATION ABOUT AN EXPECTED RESPONSE WHEN PERFORMING SPEECH RECOGNITION, filed June 10, 2014 (Braho et al.*);*
U.S. Patent Application No. 14/305,153 for INDICIA READING SYSTEM EMPLOYING DIGITAL GAIN CONTROL filed June 16, 2014 (Xian et al.*);*
U.S. Patent Application No. 14/310,226 for AUTOFOCUSING OPTICAL IMAGING DEVICE filed June 20, 2014 (Koziol et al.*);*
U.S. Patent Application No. 14/327,722 for CUSTOMER FACING IMAGING SYSTEMS AND METHODS FOR OBTAINING IMAGES filed July 10, 2014 (Oberpriller et al*,);*
U.S. Patent Application No. 14/327,827 for a MOBILE-PHONE ADAPTER FOR ELECTRONIC TRANSACTIONS, filed July 10, 2014 (Hejl);
U.S. Patent Application No. 14/329,303 for CELL PHONE READING MODE USING IMAGE TIMER filed July 11, 2014 (Coyle);
U.S. Patent Application No. 14/333,588 for SYMBOL READING SYSTEM WITH INTEGRATED SCALE BASE filed July 17, 2014 (Barten);
U.S. Patent Application No. 14/334,934 for a SYSTEM AND METHOD FOR INDICIA VERIFICATION, filed July 18, 2014 (Hejl);
U.S. Patent Application No. 14/336,188 for METHOD OF AND SYSTEM FOR DETECTING OBJECT WEIGHING INTERFERENCES, Filed July 21, 2014 (Amundsen et al.);
U.S. Patent Application No. 14/339,708 for LASER SCANNING CODE SYMBOL READING SYSTEM, filed July 24, 2014 (Xian et al.);
U.S. Patent Application No. 14/340,627 for an AXIALLY REINFORCED FLEXIBLE SCAN ELEMENT, filed July 25, 2014 (Rueblinger et al.);
U.S. Patent Application No. 14/340,716 for an OPTICAL IMAGER AND METHOD FOR CORRELATING A MEDICATION PACKAGE WITH A PATIENT, filed July 25, 2014 (Ellis);
U.S. Patent Application No. 14/342,544 for Imaging Based Barcode Scanner Engine with Multiple Elements Supported on a Common Printed Circuit Board filed March 4, 2014 (Liu et al.);
U.S. Patent Application No. 14/345,735 for Optical Indicia Reading Terminal with Combined Illumination filed March 19, 2014 (Ouyang);
U.S. Patent Application No. 14/336,188 for METHOD OF AND SYSTEM FOR DETECTING OBJECT WEIGHING INTERFERENCES, Filed July 21, 2014 (Amundsen et al.);
U.S. Patent Application No. 14/355,613 for Optical Indicia Reading Terminal with Color Image Sensor filed May 1, 2014 (Lu et al.*);*
U.S. Patent Application No. 14/370,237 for WEB-BASED SCAN-TASK ENABLED SYSTEM AND METHOD OF AND APPARATUS FOR DEVELOPING AND DEPLOYING THE SAME ON A CLIENT-SERVER NETWORK filed 07/02/2014 (Chen et al.*);*
U.S. Patent Application No. 14/370,267 for INDUSTRIAL DESIGN FOR CONSUMER DEVICE BASED SCANNING AND MOBILITY, filed July 2, 2014 (Ma et al.*);*
U.S. Patent Application No. 14/376,472, for an ENCODED INFORMATION READING TERMINAL INCLUDING HTTP SERVER, filed 08-04-2014 (Lu*);*
U.S. Patent Application No. 14/379,057 for METHOD OF USING CAMERA SENSOR INTERFACE TO TRANSFER MULTIPLE CHANNELS OF SCAN DATA USING AN IMAGE FORMAT filed August 15, 2014 (Wang et al.*);*
U.S. Patent Application No. 14/452,697 for INTERACTIVE INDICIA READER, filed August 6, 2014 (Todeschini);
U.S. Patent Application No. 14/453,019 for DIMENSIONING SYSTEM WITH GUIDED ALIGNMENT, filed August 6, 2014 (Li et al.);
U.S. Patent Application No. 14/460,387 for APPARATUS FOR DISPLAYING BAR CODES FROM LIGHT EMITTING DISPLAY SURFACES filed August 15, 2014 (Van Horn et al.);
U.S. Patent Application No. 14/460,829 for ENCODED INFORMATION READING TERMINAL WITH WIRELESS PATH SELECTON CAPABILITY, filed August 15, 2014 (Wang et al.);
U.S. Patent Application No. 14/462,801 for MOBILE COMPUTING DEVICE WITH DATA COGNITION SOFTWARE, filed on August 19, 2014 (Todeschini et al.);
U.S. Patent Application No.14/446,387 for INDICIA READING TERMINAL PROCESSING PLURALITY OF FRAMES OF IMAGE DATA RESPONSIVELY TO TRIGGER SIGNAL ACTIVATION filed July 30, 2014 (Wang et al.);
U.S. Patent Application No. 14/446,391 for MULTIFUNCTION POINT OF SALE APPARATUS WITH OPTICAL SIGNATURE CAPTURE filed July 30, 2014 (Good et al.);
U.S. Patent Application No. 29/486,759 for an Imaging Terminal, filed April 2, 2014 (Oberpriller et al.);
U.S. Patent Application No. 29/492,903 for an INDICIA SCANNER, filed June 4, 2014 (Zhou et al.); and
U.S. Patent Application No. 29/494,725 for an IN-COUNTER BARCODE SCANNER, filed June 24, 2014 (Oberpriller et al.).

In the specification and/or figures, typical embodiments of the invention have been disclosed. The present invention is not limited to such exemplary embodiments. The use of the term "and/or" includes any and all combinations of one or more of the associated listed items. The figures are schematic representations and so are not necessarily drawn to scale. Unless otherwise noted, specific terms have been used in a generic and descriptive sense and not for purposes of limitation.
The following numbered statements form part of the description, and describe embodiments.
Statement 1. A method, comprising: displaying a user interface on a second portion of a display of a device and an application on a first portion of the display; initiating barcode scanning via the user interface; removing the user interface from the second portion;
   opening a viewfinder on the second portion; routing a video feed from a camera of the device to the viewfinder; locating a barcode in the viewfinder; decoding the located barcode with the device into decoded barcode information; and displaying the decoded barcode information on the first portion of the display within the application.
Statement 2. The method of statement 1, wherein: the user interface is a custom software input panel, the custom software input panel having a barcode scanning key; and the initiating step being accomplished by touching the barcode scanning key.
Statement 3. The method of statement 1, wherein: the user interface is provided with voice command capability; and the initiating step is accomplished by a voice command.
Statement 4. The method of statement 1, comprising: closing the viewfinder; and re-displaying the user interface to occupy the second portion of the display.
Statement 5. The method of statement 1, wherein the decoding step is accomplished at a remote location, the remote location being wireless enabled and in communication with the device, the method comprising: transmitting an image of the barcode to the remote location before the decoding step; and transmitting the decoded barcode information back to the device after the decoding step.
Statement 6. The method of statement 1, wherein the device comprises a keyboard wedge communicatively coupled to barcode scanning software, the method comprising translating, via the keyboard wedge, the decoded barcode information into keyboard strokes.
Statement 7. The method of statement 1, wherein the removing step is accomplished by closing the user interface.
Statement 8. The method of statement 1, wherein the removing step is accomplished by minimizing the user interface.
Statement 9. A device, comprising: a display having a first portion and a second portion; and
   a camera; wherein the device is configured for: displaying a user interface on the second portion of the display and an application on the first portion of the display; initiating barcode scanning via the user interface; removing the user interface from the second portion;
   opening a viewfinder on the second portion; routing a video feed from the camera to the viewfinder; locating a barcode in the viewfinder; decoding the located barcode into decoded barcode information; and displaying the decoded barcode information on the first portion of the display within the application.
Statement 10. The device of statement 9, wherein: the user interface is a custom software input panel, the custom software input panel having a barcode scanning key; and the initiating step being accomplished by touching the barcode scanning key.
Statement 11. The device of statement 9, wherein: the user interface is provided with voice command capability; and the initiating step is accomplished by a voice command.
Statement 12. The device of statement 9, wherein the device is configured for:
   closing the viewfinder; and re-displaying the user interface to occupy the second portion of the display.
Statement 13. The device of statement 9, comprising a keyboard wedge communicatively coupled to barcode scanning software, wherein the device is configured for translating, via the keyboard wedge, the decoded barcode information into keyboard strokes.
Statement 14. The device of statement 9, wherein the device is configured for removing the user interface from the second portion by closing the user interface.
Statement 15. The device of statement 9, wherein the device is configured for removing the user interface from the second portion by minimizing the user interface.

## Claims

1. A computer program product comprising one or more instructions that are executable by a processor to:
cause display of an application (14) on at least a portion of a display (11) of a device;
cause display of a software input panel (12) including a barcode scanning key (13) on the display (11), wherein the processor causes the software input panel (12) and the application (14) to be simultaneously displayed on the display (11);
initiate a barcode scanning operation via a barcode scanning application (19) in response to selecting the barcode scanning key (13);
open a viewfinder (15) on the display (11);
route a video feed from a camera of the device to the viewfinder (15);
analyze at least a portion of the video feed from the camera to locate one or more barcodes (22);
attempt to decode the one or more barcodes (22) in the video feed from the camera; and
subsequent to attempting to decode the one or more barcodes (22) in the video feed from the camera, remove the viewfinder (15) from the display (11).

2. The computer program product according to claim 1, wherein the processor is further configured to cause display of a decoded barcode information within the application (14) on the at least the portion of the display (11).

3. The computer program product according to claim 1, wherein the barcode scanning application (19) is a different application from the application (14).

4. The computer program product according to claim 1, wherein the application (14) is continuously running and being displayed on at least the portion of the display (11) during the barcode scanning operation.

5. The computer program product according to claim 1, wherein the processor is configured to generate decoded barcode information based on decoding of the one or more barcodes (22).

6. The computer program product according to claim 1, wherein the processor is further configured to translate the decoded barcode information into keyboard strokes.

7. The computer program product according to claim 7, wherein the processor is further configured to cause display of the keyboard strokes (16) within the application (14).

8. The computer program product according to any of claims 1 to 3, wherein the processor is further configured to close, upon receipt of a user press of the barcode scanning key (13), the software input panel.

9. The computer program product according to claim 1, wherein the processor is further configured to:
translate the decoded barcode information into keyboard strokes at a keyboard wedge, wherein the keyboard wedge is a software program or is hardware.

10. The computer program product of any of claims 1 to 5, wherein the processor is further to:
transmit an image of the one or more barcodes (22) to a remote location; and
receive the decoded barcode information from the remote location.

11. The computer program product according to claim 6, wherein the processor is configured to wirelessly transmit the image of the one or more barcodes (22) to the remote location for decoding.

12. An apparatus comprising:
a processor and a memory including program code, the memory and the program code configured to, with the processor, cause the apparatus to at least:
display an application (14) on a display (11); and
display, upon receipt of an input, a viewfinder (15) on at least a portion of the display (11), wherein the application (14) and the viewfinder (15) are simultaneously displayed on the display (11);
decode a barcode (22) located in the viewfinder (15) to generate decoded barcode information;
display information associated with the decoded barcode within the application; and
close the viewfinder (15) after the decoding.

13. The apparatus according to Claim 12, wherein the memory and the program code is further configured to, with the processor, cause the apparatus to at least:
display a user interface (12) with the barcode scanning key (13) and the application (14) on the display; and
remove the user interface (12) upon detecting the indication of the user interaction with the barcode scanning key.

14. The apparatus according to any of Claim 12, wherein the memory and the program code is further configured to, with the processor, cause the apparatus to at least:
translate, using a keyboard wedge (18), the decoded barcode information into the keyboard strokes.

15. The apparatus according to Claim 12, wherein the processor is configured to display a barcode scanning key (13) along with displaying the application (14).
